Europäisches Patentamt

European Patent Office

Office européen des brevets

(19)

(11) Numéro de publication : **0 094 864**
**B1**

(12) # FASCICULE DE BREVET EUROPÉEN

(45) Date de publication du fascicule du brevet :
20.08.86

(51) Int. Cl.⁴ : **G 01 B 11/00**

(21) Numéro de dépôt : **83400892.2**

(22) Date de dépôt : **03.05.83**

(54) **Procédé et dispositif de mesure simultanée de caractéristiques géométriques d'une fibre optique.**

(30) Priorité : **14.05.82 FR 8208479**

(43) Date de publication de la demande :
**23.11.83 Bulletin 83/47**

(45) Mention de la délivrance du brevet :
**20.08.86 Bulletin 86/34**

(84) Etats contractants désignés :
**DE GB IT NL**

(56) Documents cités :
FR-A- 1 510 948
FR-A- 2 437 637
US-A- 4 299 491

(73) Titulaire : **THOMSON-CSF
173, Boulevard Haussmann
F-75379 Paris Cedex 08 (FR)**

(72) Inventeur : **Bourbin, Yannic
THOMSON-CSF SCPI 173, bld Haussmann
F-75379 Paris Cedex 08 (FR)**
Inventeur : **Arditty, Hervé
THOMSON-CSF SCPI 173, bld Haussmann
F-75379 Paris Cedex 08 (FR)**

(74) Mandataire : **Lepercque, Jean et al
THOMSON-CSF SCPI 19, avenue de Messine
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention se rapporte à un procédé de mesure simultanée de caractéristiques géométriques d'une fibre optique et notamment de la concentricité cœur optique-gaine mécanique et de l'ellipticité du cœur optique d'une fibre optique et à un dispositif de mise en œuvre de ce procédé.

Comme il est connu, une fibre optique comporte un cœur optique et une gaine mécanique. Le cœur et la gaine se différencient essentiellement par leur indice de réfraction optique. L'évolution de cet indice de réfraction optique s'effectue selon un profil déterminé. Après tréfilage, la fibre optique est constituée le plus souvent de ces deux régions, d'un tube support et d'une gaine de protection extérieure disposée autour de ce tube support dans une phase de fabrication ultérieure.

Il existe deux types de fibres :

des fibres optiques du type multimode, le plus souvent à gradient d'indice, pour lesquelles le diamètre de cœur est typiquement de 50 micromètres et le diamètre extérieur de la gaine optique est de 70 micromètres ;

des fibres du type dit monomode, le plus souvent à saut d'indice, pour lesquelles le diamètre de cœur est compris entre 5 et 10 micromètres et le diamètre extérieur de la gaine optique est d'environ 40 micromètres.

Le diamètre extérieur du tube support, le plus souvent en silice pure, est d'environ 125 micromètres et le diamètre extérieur de la gaine de protection, en silicone par exemple, est de l'ordre de 300 micromètres.

L'apparition de fibres optiques en silice/silice dopée a permis de diminuer dans de grandes proportions les pertes de transmission optiques de fibres optiques. Actuellement des fibres ayant des pertes inférieures à 0,5 dB par km peuvent être réalisées. Il est nécessaire, pour obtenir de telles performances, que les fibres soient très homogènes. En particulier, pour obtenir un couplage entre deux fibres présentant de faibles pertes, il faut que les caractéristiques géométriques de ces deux fibres soient très voisines. Il est donc nécessaire de contrôler ces caractéristiques avec une grande précision ; et parmi celles-ci la concentricité cœur-gaine et l'ellipticité du cœur. Il est d'autre part nécessaire d'effectuer un nombre suffisant de mesures pour s'assurer de l'homogénéité de ces caractéristiques géométriques le long de la fibre.

Il est connu d'effectuer ces mesures à l'aide d'un microscope en utilisant un réticule comprenant deux cercles concentriques correspondant au cœur optique et à la gaine mécanique d'une fibre optique idéale ; c'est-à-dire de cœur optique et de gaine mécanique parfaitement cylindriques et concentriques l'un par rapport à l'autre, le cœur de cette fibre optique étant éclairé par un faisceau de lumière blanche. Dans ce cas l'enveloppe de protection a été enlevée avant la mesure. Mais cette mesure ne permet que d'effectuer un tri par rapport à des valeurs d'ellipticité et d'excentricité limites. Elle ne donne pas d'ordre de grandeur de celles-ci.

Ce procédé est donc purement manuel, et ne permet pas d'effectuer des mesures précises des caractéristiques à mesurer, il ne permet qu'un tri.

Un tel procédé peut être inspiré du procédé d'élaboration d'une enveloppe d'une fibre optique et du centrage de l'extrémité de la fibre dans cette enveloppe, procédé décrit dans la demande de brevet français publiée le 25 avril 1980 sous le N° 2 437 637.

L'invention tout au contraire, propose un procédé et un dispositif de mise en œuvre de ce procédé ne nécessitant qu'un appareillage simple et permettant la mesure précise des paramètres précités de façon automatique. De plus, il n'est plus nécessaire de déterminer les dimensions géométriques de la fibre avant d'effectuer la mesure de ces paramètres, ce qui n'était pas vrai dans les procédés de l'art connu.

L'invention a pour objet un procédé de mesure de caractéristiques géométriques d'une fibre optique qui comporte au moins un cœur optique, une gaine mécanique et une gaine de protection, cette mesure comprenant au moins la mesure de la concentricité du cœur optique-gaine mécanique et de l'ellipticité du cœur, caractérisé en ce qu'il comprend :

une première étape pour la préparation de la fibre objet de la mesure consistant à mettre à nu la gaine mécanique sur une longueur de cette fibre à une première extrémité de celle-ci, à scier et à polir la face de cette première extrémité de cette fibre ;

une deuxième étape pour le positionnement d'une source de lumière incohérente produisant un faisceau lumineux face à la deuxième extrémité de cette fibre pour envoyer ce faisceau lumineux à l'intérieur de cette fibre ;

une troisième étape pour l'analyse du champ proche de cette fibre à sa première extrémité et consistant à former dans un plan une image agrandie de la face de sortie de cette première extrémité de la fibre, un photodétecteur étant placé dans ce plan, une rotation relative par rapport au centre de la gaine mécanique de la fibre étant réalisée entre cette image et ce photodétecteur, cette rotation étant effectuée à une fréquence $f_0$ ;

une quatrième étape destinée au traitement du signal reçu par ce photodétecteur, comprenant :

une phase d'étalonnage de la mesure par comparaison à des signaux de référence ;

une phase de détection de l'amplitude du signal reçu par le photodétecteur aux fréquences multiples de la fréquence de rotation $f_0$ ;

2

une phase de détermination de la concentricité cœur optique-gaine mécanique et de l'ellipticité du cœur optique à partir des amplitudes mesurées aux fréquences $f_0$ et $2f_0$.

L'invention a également pour objet un dispositif tel que défini dans la revendication 3 mettant en œuvre ce procédé.

L'invention sera mieux comprise et d'autres avantages apparaîtront à l'aide de la description qui suit, en référence aux figures annexées :

la figure 1 met en évidence les paramètres à mesurer ;

les figures 2 à 13 illustrent différentes configurations de fibres optiques ainsi que les signaux correspondants donnés par le procédé ;

la figure 14 met en évidence les paramètres à mesurer ;

la figure 15 représente le dispositif mettant en œuvre le procédé de l'invention.

Les paramètres à mesurer sur une fibre optique sont de natures physiques très différentes ; il est ainsi intéressant d'effectuer certains groupements au niveau de la caractérisation suivant le paramètre physique mis en œuvre. On applique la classification suivante :

Caractéristiques géométriques : Elles regroupent toutes les mesures ayant un rapport avec les dimensions du cœur, de la gaine et certains revêtements de la fibre.

Caractéristiques optiques : Elles portent sur toutes les mesures optiques pouvant être effectuées dans un plan de section droite de la fibre (ex : ouverture numérique, profil d'indice...)

Caractéristiques de transmission : Elles regroupent toutes les mesures portant sur la propagation de la lumière dans la fibre, qu'il s'agisse des caractéristiques propres à la porteuse (atténuation) ou de celles propres à la modulation (réponse en bande de base). Les mesures de longueur et de continuité de guide optique sont également comprises dans ce paragraphe.

Caractéristiques mécaniques : Elles portent sur un ensemble de tests (tension, traction, vibration...) à faire subir à la fibre, afin de lui garantir une bonne résistance mécanique directement reliée à sa durée de vie.

Dans le cas des caractéristiques géométriques de la fibre, deux approches peuvent être faites pour mesurer ces paramètres, si importants dans les problèmes de connexion.

La première, qui peut être qualifiée d'analytique consiste à mesurer indépendamment les uns des autres les paramètres géométriques d'une section droite de fibre. On mesure ainsi :

Le diamètre de cœur et sa non-circularité,

le diamètre de gaine et sa non-circularité,

le diamètre du premier revêtement plastique et sa non-circularité,

la non-concentricité du cœur et de la gaine,

la non-concentricité du cœur et du revêtement primaire. Les nominales et les tolérances sur chacun de ces paramètres étant connues, on déterminera ainsi paramètre par paramètre si la fibre convient.

La seconde, qu'on peut appeler synthétique, consiste à définir un gabarit de cercles concentriques, à partir des valeurs nominales et des tolérances du cœur et de la gaine et à vérifier si l'image donnée par une section droite de fibre rentre ou non dans ce gabarit.

Quelle que soit la procédure employée, il faut réaliser une image agrandie d'une section droite de la fibre. Celle-ci est obtenue en réalisant un montage optique, voisin de celui rencontré dans un microscope, qui visualise le champ proche d'un objet soumis à illumination.

La source de lumière qui éclaire la fibre doit être très divergente pour exciter également tous les modes de la fibre, et ne doit pas être nécessairement monochromatique (lampe à arc par exemple).

La longueur de l'échantillon est en général courte, les extrémités étant soigneusement préparées.

Le procédé de l'invention se rattache à cette première approche qualifiée d'analytique.

Ainsi, le procédé permet la mesure quantitative simultanée de deux paramètres très important pour la connexion de deux fibres optiques qui sont la concentricité cœur optique-gaine mécanique et l'ellipticité du cœur optique de ces fibres et ce, de manière simple. Le procédé permet aussi de trouver les symétries d'ordres supérieures (3, 4 ...) du cœur en employant le même principe de base.

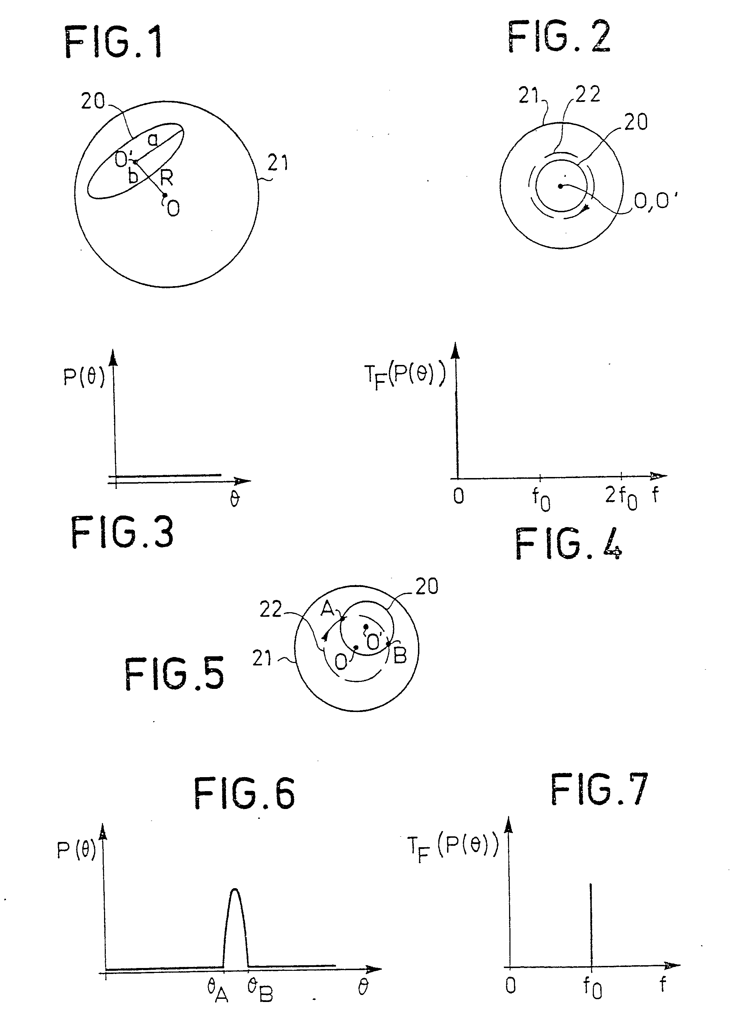

Sur la figure 1 représentant une image agrandie d'une section droite de la fibre, la gaine mécanique 21 a un centre de symétrie O, et le cœur optique 20 a un centre de symétrie O', la concentricité est la valeur OO', et l'ellipticité $\varepsilon$ est donné par la formule : $\varepsilon^2 = a^2 - b^2$ : a étant le demi grand axe de l'ellipse représentant le cœur, et b le demi petit axe de cette même ellipse.

Le procédé de l'invention présente l'avantage sur les autres procédés de ne pas avoir à déterminer les dimensions géométriques de la fibre pour obtenir les défauts d'excentrement cœur gaine et les symétries d'ordre 2 (ellipticité) et d'ordres supérieurs du cœur. En outre, le procédé mettant en œuvre ce procédé permet d'éliminer les erreurs de mesure de l'opérateur en grande partie subjectives dans les procédés actuels par l'utilisation d'une électronique de mesure stable d'un signal optique issu de la fibre à caractériser.

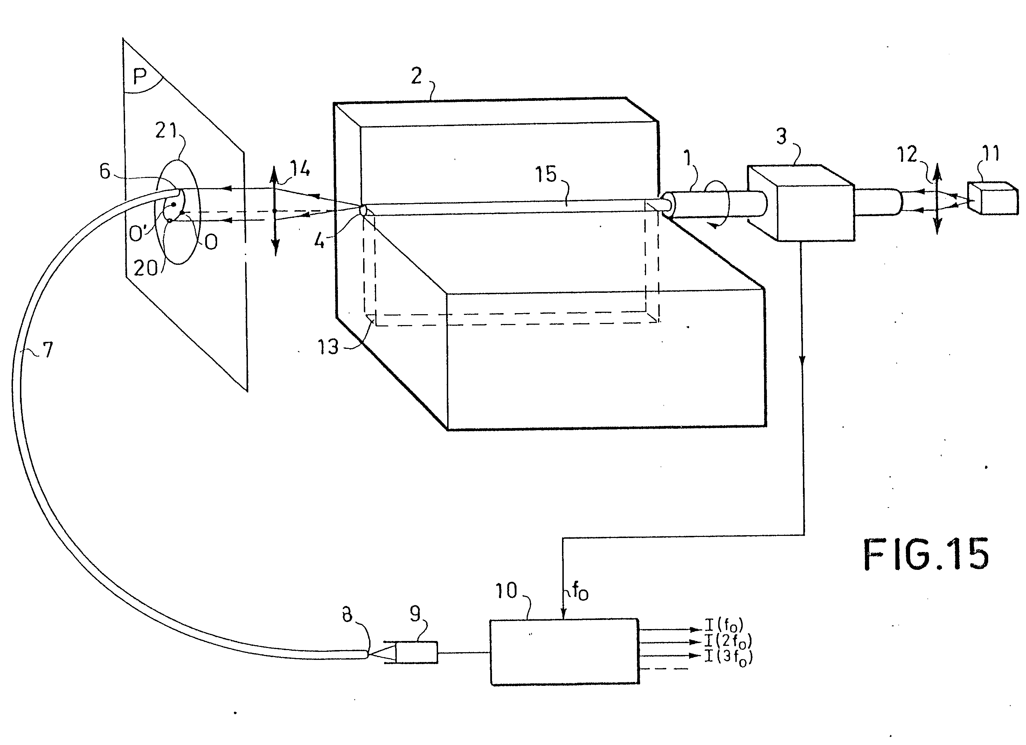

Le dispositif mettant en œuvre le procédé de l'invention sera décrit dans la suite de la description en explication de la figure 15.

Le procédé de l'invention est le suivant : De la lumière incohérente est envoyée dans une courte longueur de fibre optique (de 1 à 10 mètres) et est récupérée à l'autre extrémité de la fibre, extrémité que l'on aura pris soin de bien préparer par dénudage de la gaine mécanique, sciage, puis polissage par exemple. Le champ proche de la fibre à mesurer est ensuite agrandi grâce à un dispositif optique et

3

analysé grâce à une photodiode quasi ponctuelle animée d'un mouvement de rotation autour du centre du cercle supposé parfait qui définit l'extérieur de la gaine mécanique de la fibre. La direction du signal lu par la photodiode en bande étroite autour de fréquences multiples de la fréquence $f_c$ de rotation de la photodiode donne les informations recherchées. L'amplitude à $f_0$ est liée à la concentricité cœur gaine, celle à $2f_0$ à l'ellipticité du cœur, celle à $3f_0$ à sa symétrie d'ordre 3 etc... Dans le cas d'un profil d'indice parabolique le calcul permet de montrer que l'amplitude à $f_0$ est proportionnelle à la concentricité cœur gaine, que celle à $2f_0$ est proportionnelle au carré de l'ellipticité du cœur. Un étalonnage préalable du dispositif permet par exemple de déterminer les constantes de proportionnalité à différentes fréquences.

Différentes configurations d'une section droite de la fibre sont à considérer, au vu du signal de mesure qui donne la puissance lumineuse reçue par la photodiode en fonction de l'instant θ, et de la transformée de Fourier de ce signal qui permet de mettre en évidence les raies des fréquences $f_0$, $2f_0$ et $3f_0$.

Sur la figure 2, O est le centre de la gaine mécanique 21 de la fibre qui est ici considéré comme un cylindre parfait et O' est le centre du cercle 20 qui représente le cœur de la fibre.

On fait tourner selon le cercle 22 un détecteur autour de O, ou ce qui revient au même on peut faire tourner la fibre ; la rotation relative est donc représentée par le cercle 22 en considérant un détecteur fixe. Il suffit donc de dire qu'il y a une rotation relative 22 entre le détecteur et l'image agrandie du champ proche de la face de la fibre dans un plan P qui est le plan dans lequel se situent les différentes configurations de fibre que l'on va examiner ci-dessous.

Si la fibre est parfaite, comme représenté à la figure 2, O est alors confondu avec O', le cercle 22 qui décrit le mouvement relatif du détecteur par rapport à la fibre ne coupera pas l'ellipse représentant le cœur, dont le grand axe sera égal au petit axe, c'est donc un cercle concentrique au cercle 21 de la gaine.

Ainsi la puissance lumineuse sera alors une constante comme illustré à la figure 3.

La transformée de Fourier de ce signal est représenté à la figure 4. Il ne comporte qu'une raie à la fréquence 0.

Si le cœur est représenté par un cercle, mais si celui-ci est décentré comme à la figure 5, O et O' ne sont plus confondus. On a alors à la figure 6 la courbe représentative de la puissance lumineuse 2 en fonction de l'angle θ de la rotation relative du détecteur par rapport à la fibre. On voit ainsi apparaître une raie à la fréquence $f_0$ de la rotation, cette raie apparaît sur la figure 7 qui est la transformée de Fourier du signal reçu par le détecteur.

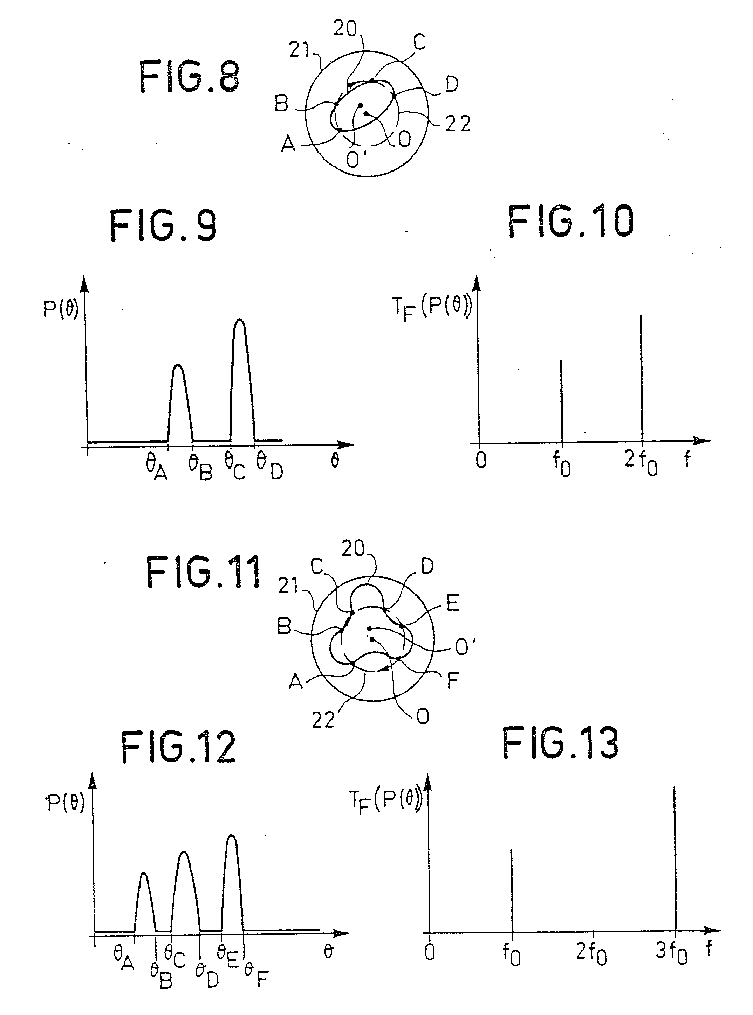

Si, à présent, le cœur de la fibre est représenté par une ellipse 20 comme à la figure 8. La courbe représentée à la figure 9 de la puissance lumineuse en fonction de l'instant θ présente deux raies : elle présente une composante à la fréquence de la rotation $f_0$ ainsi qu'à une fréquence double $2f_0$. Si O et O' sont confondus l'amplitude de ces deux raies est alors identique. La transformée de Fourier de ce signal est représentée à la figure 10.

Si le cercle 22 de la rotation relative du détecteur ne coupe pas cette ellipse, c'est que le cœur est vraiment trop excentré, cette fibre doit alors être éliminée.

Si la courbe représentative du cœur est de forme plus torturée, l'ellipticité peut alors être du troisième ordre et la courbe de la puissance en fonction de l'instant θ présente alors trois raies comme représenté aux figures 11, 12 et 13. Sur la figure 11 on considère une image du cœur de forme symétrique par rapport à trois segments issus du centre O' et formant des angles de 120° entre eux, aussi n'y a-t-il à la figure 13 représentant la transformée du signal reçu que deux raies l'une à $f_0$ l'autre à $3f_0$.

Mais l'amplitude de ces différentes raies à $f_0$, $2f_0$, $3f_0$ va permettre de calculer les caractéristiques géométriques recherchées de la fibre.

Dans le cas d'une bonne fibre, c'est-à-dire lorsque le cœur n'est pas trop décentré, la puissance reçue par le détecteur n'influe pas sur le nombre de raies, mais seulement sur l'amplitude de ces raies.

En effet, lorsqu'un point décrit un cercle de rayon ɸ centré en O à une vitesse $d\theta/dt = \omega_0$ on trouve que le développement de Fourier de la puissance reçue par ce point est de la forme :

$$P(\theta) = I_0 + I_1 e^{-i\theta} + I_2 e^{-2i\theta} + R(\theta) e^{-3i\theta}$$

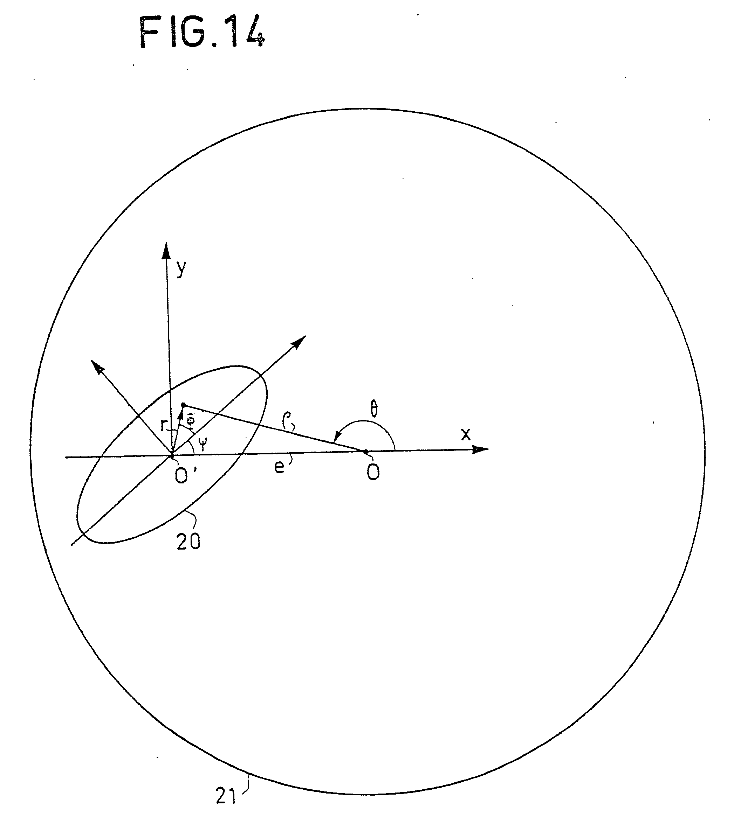

La nature des grandeurs, θ r, $\Psi$, $\Phi$, ρ, figurant dans l'équation ci-dessus ou dans les développements mathématiques qui suivent se déduit de l'examen de la figure 14.

Les grandeurs $I_0$, $I_1$, $I_2$ sont les amplitudes des raies du spectre de puissance de Fourier du signal délivré par le photodétecteur aux fréquences de rotation respectivement : nulle, f et 2f. $R(\theta)$ représente l'ensemble des puissances des raies à toutes les autres fréquences de ce même signal.

Sur la figure 14, O est le centre de l'image agrandie de la face de la fibre, O' le centre de symétrie du cœur optique supposé elliptique de celle-ci.

OO' est le décentrement entre le cœur et la gaine de la fibre : $OO' \theta e$ et ε l'ellipticité du cœur de la fibre telle que $\varepsilon^2 = a^2 - b^2$.

Dans le cas d'un cœur elliptique à répartition d'indice de réfraction parabolique et d'un cœur décentré par rapport à la gaine, l'indice de réfraction du cœur dans le système d'axes de l'ellipse est donné par :

$$n^2(r, \phi) = n^2(0) \left[ 1 - 2\, \Delta\, \frac{r^2}{a^2} \left( 1 - \left( \frac{\varepsilon}{b} \right)^2 \sin^2 \phi \right) \right]$$

($\Delta$ est la variation d'indice totale).

Une bonne approximation consiste à dire que la puissance lumineuse en tout point du champ proche est proportionnelle au carré de l'indice en ce point. On supposera $P(r,\phi) = k n^2(r,\phi)$, k étant une constante.

Si on se ramène au centre de la rotation dans un repère fixe dans lequel le photodétecteur occupe une position fixe.

$$\begin{cases} r^2 = \rho^2 - e^2 - 2\, e\rho \cos(\pi - \theta) = \rho^2 + e^2 + 2\, e\rho \cos\theta \\ \rho^2 = \qquad\qquad\qquad\quad = r^2 + e^2 - 2\, er \cos(\phi + \Psi) \\ e^2 = \qquad\qquad\qquad\quad = r^2 + \rho^2 - 2\, \rho r \cos(\theta - (\phi + \Psi)) \end{cases}$$

d'où l'on déduit après calculs :

$$\sin^2 \phi = \sin^2 \Psi + \rho \sin\theta \, \frac{\rho \sin(\theta - 2\Psi) - e \sin 2\Psi}{(e + \rho \cos\theta)^2 + \rho^2 \sin^2 \theta}$$

et donc

$$P(r, \phi) = P(\theta) = n^2(0) (1 - 2\Delta) \frac{\rho^2 + e^2 + 2\, e\rho \cos\theta}{a^2} \left[ 1 + \left( \frac{\varepsilon}{b} \right)^2 (\sin^2 \Psi + \right.$$

$$\left. + \rho \sin\theta \left( \frac{\rho \sin(\theta - 2\Psi) - e \sin 2\Psi}{(e + \rho \cos\theta)^2 + \rho^2 \sin^2 \theta} \right) \right]$$

les relations $r \simeq \rho$ et $e \ll \rho$ peuvent alors être prises en compte. En tenant compte de ces deux relations et en effectuant les approximations qui en résultent, on calcule les termes facteurs de $\cos\theta$, $\sin\theta$, $\sin 2\theta$.
Comme

$$P(\theta) = I_0 + I_1 e^{-i\theta} + I_2 e^{-2i\theta} + R(\theta) e^{-3i\theta}$$

à T on a une raie d'amplitude

$$I_1 = 4\, \Delta\, \frac{e\rho}{a^2}\, n^2(0)$$

ce qui permet d'obtenir l'excentrement e
à $2\theta$ on a une raie d'amplitude

$$I_2 = \Delta n^2(0)\, \frac{\rho^2}{a^2} \left( \frac{\varepsilon}{b} \right)^2$$

ce qui permet d'obtenir l'ellipticité au carré soit $\varepsilon^2$.

Ainsi la raie obtenue par la transformée de Fourier du signal reçu par le détecteur à la fréquence de rotation $f_0$ est proportionnelle à e et la raie à une fréquence double de la fréquence de rotation proportionnelle à $\varepsilon^2$.

La fibre prise à titre d'exemple indicatif dans les calculs précédents est une fibre fortement multimode pour laquelle le profil d'indice, en se rapprochant du cœur est à peu près parabolique, c'est-à-dire que la puissance lumineuse est donnée par la relation $P = k n^2$.

Dans une fibre monomode ce profil est un signal gaussien.

Ainsi dans les calculs, la fibre considérée était une fibre fortement multimode, aussi on a employé, pour la simplicité de ces calculs, une puissance de forme parabolique en fonction du rayon. Pour une fibre monomode, en toute rigueur, il faut recommencer les calculs avec une puissance gaussienne en fonction du rayon mais l'on obtient les mêmes résultats.

La figure 15 illustre le dispositif mettant en œuvre le procédé selon l'invention.

La fibre 1 à mesurer est dénudée sur une certaine longueur et une de ses extrémités est préparée (sciage et polissage ou cassure très propre). La longueur de la partie 15 de fibre ainsi dénudée est maintenue dans un mandrin à vide 2 de haute précision et un dispositif 3 imprime un mouvement de rotation à la partie non dénudée de la fibre 1 de manière à ce que cette partie puisse s'appuyer sur les surfaces rectifiées du mandrin formant dièdre. La face préparée 4 de la partie dénudée de la fibre 1 arrive au bord du dièdre. Une image agrandie du champ proche de la fibre est faite dans un plan P. La grande rectitude des parois du dièdre ainsi que la très bonne circularité du tube de silice entourant la fibre permet de connaître avec une bonne précision le centre de l'image de la gaine mécanique de la fibre 1 dans le plan P. L'extrémité 6 d'une fibre monomode 7 est placée dans le plan P de manière à y rencontrer l'image 20 du cœur de la fibre 1 objet de la mesure. L'autre extrémité 8 de cette fibre monomode 7 est placée devant un photodétecteur 9 couplé à une électronique de traitement 10 destinée à regarder le signal reçu à des fréquences égale, double, triple... d'une fréquence $f_0$ donnée. De la lumière est injectée dans la fibre 1 grâce à une source 11 et à un premier objectif ou optique de couplage 12. Le dispositif 3 anime la partie non dénudée de la fibre 1 d'un mouvement de rotation de la fréquence $f_0$. Après étalonnage de la manipulation par comparaison à des signaux de référence. la lecture aux différentes fréquences $f_0$, $2f_0$, $3f_0$... des signaux fournis par l'électronique 10 donne les renseignements cherchés : concentricité cœur-gaine, ellipticité du cœur, etc.

Dans un mandrin à vide 2 ou mandrin à dépression pour fibres optiques. la position de la fibre est repérée par rapport aux faces rectifiées et polies d'un sillon en V et maintenue fermement par le vide créé via une fente 13 spécialement étudiée et optimisée pour le diamètre de la fibre considérée.

Sur la figure 15, la fibre 1 a une faible longueur qui ne nécessite pas de l'enrouler sur un tambour par exemple.

Mais elle peut avoir une longueur comprise, par exemple entre 1 et 10 mètres. Dans le cas d'une plus grande longueur que 10 m, elle est enroulée sur un tambour, et on fait tourner l'ensemble source 11. premier objectif 12, tambour sur lequel est enroulé la partie de la fibre non dénudée et qui ainsi est située entre le mandrin 2 et la source 11, mandrin 2, à la fréquence $f_0$ considérée.

Ainsi sur cette figure 15 le faisceau de lumière émis par la source de lumière 11. qui est par exemple une source de lumière incohérente est collimaté par le premier objectif 12 pour atteindre le cœur de la fibre optique 1. La gaine mécanique de cette fibre optique 2 a été mise à nu à l'extrémité de la partie dénudée 15 de cette fibre 1 ; cette partie étant positionnée dans le mandrin à vide de haute précision dont la fente 13 permet, par dépression, de maintenir le contact entre la longueur de la partie dénudée 15 et le mandrin 2. Le dispositif 3 permet de faire tourner la partie non dénudée à la fréquence de rotation $\omega_0 = 2\pi f_0$. Ce dispositif 3 peut être par exemple composé de galets en rotation qui coincent la fibre en la faisant tourner.

Le faisceau lumineux qui sort de la face de sortie 4 de la fibre est projeté via un second objectif 14 dans le plan P sur lequel on reconnaît le cercle de centre O représentant la gaine mécanique de la fibre et l'ellipse de centre O' correspondant au cœur de cette fibre.

Le bout de la fibre monomode 7 considéré à titre d'exemple est utilisé comme récepteur ponctuel de lumière 6 ; ce récepteur décrivant un cercle relatif par rapport à l'ellipse représentative du cœur de la fibre 1. La fibre monomode 7 permet de faire la liaison avec un détecteur 9 lui-même relié à un circuit de traitement 10 qui comprend un détecteur synchrone de la fréquence de rotation $f_0$.

Il est tout aussi possible d'envisager une fibre 1 ayant une partie non dénudée fixe et de faire tourner le récepteur ponctuel 6.

Les différents alignements réalisés entre la source 11 et la fibre 1 via l'objectif 12 entre l'extrémité 18 de la fibre 7 et le détecteur 9 ainsi que le positionnement de l'autre extrémité ou récepteur ponctuel 6 de la fibre 7 dans le plan P sont du domaine de l'art connu.

Il n'y a pas nécessité de précision d'alignement de la fibre par rapport au mandrin à vide.

Lorsque la fibre 1 objet de la mesure est une fibre multimode, on s'arrange pour vider les modes transmis dans la gaine par exemple en faisant baigner une partie de la fibre dénudée dans un liquide adaptateur d'indice, ce qui permet d'avoir une plus grande dynamique de mesure.

La longueur de fibre prise en compte est considérée comme inférieure à 10 mètres. car pour cette longueur la loi d'équilibre modale est réalisée pour une fibre multimode. et pour une fibre monomode enroulée sur un tambour, on a vidé les modes de gaine. Pour de plus grandes longueurs apparaissent alors des pertes de propagation.

L'invention trouve une application principale en caractéristique de fibres optiques ainsi qu'en connectique pour fibre optique au centrage automatique du cœur d'une fibre dans un embout connecteur.

## Revendications

1. Procédé de mesure de caractéristiques géométriques d'une fibre (1) optique qui comporte au moins un cœur optique (20). une gaine mécanique (21) et une gaine de protection. cette mesure comprenant au moins la mesure de la concentricité du cœur optique-gaine mécanique et de l'ellipticité du cœur. caractérisé en ce qu'il comprend :

une première étape pour la préparation de la fibre (1) objet de la mesure consistant à mettre à nu la gaine mécanique sur une longueur (15) de cette fibre à une première extrémité de celle-ci. à scier et à polir la face (4) de cette première extrémité de cette fibre ;

une deuxième étape pour le positionnement d'une source (11) de lumière incohérente produisant un faisceau lumineux face à la deuxième extrémité de cette fibre (1) pour envoyer ce faisceau lumineux à l'intérieur de cette fibre (1) ;

une troisième étape pour l'analyse du champ proche de cette fibre (1) à sa première extrémité et consistant à former dans un plan (P) une image agrandie de la face (4) de sortie de cette première extrémité de la fibre. un photodétecteur (6) étant placé dans ce plan (P). une rotation relative par rapport au centre de la gaine mécanique (21) de la fibre étant réalisée entre cette image et ce photodétecteur (6). cette rotation étant effectuée à une fréquence $f_0$ ;

une quatrième étape destinée au traitement du signal reçu par ce photodétecteur (6). comprenant :

une phase d'étalonnage de la mesure par comparaison à des signaux de référence :

une phase de détection de l'amplitude du signal reçu par le photodétecteur aux fréquences multiples de la fréquence de rotation $f_0$ ;

une phase de détermination de la concentricité cœur optique-gaine mécanique et de l'ellipticité du cœur optique à partir des amplitudes mesurées aux fréquences $f_0$ et $2f_0$.

2. Procédé de mesure selon la revendication 1, caractérisé en ce que la quatrième étape comporte en outre la détermination de la symétrie d'ordre trois du cœur optique à partir de l'amplitude du signal de la fréquence $3f_0$.

3. Dispositif pour la mise en œuvre du procédé selon l'une quelconque des revendications 1 ou 2, caractérisé en ce qu'il comprend une source (11) de lumière incohérente qui émet un faisceau de lumière : un premier objectif (12) qui permet de collimater ce faisceau ; une fibre optique (1) comprenant au moins un cœur optique (20), une gaine mécanique (21) et une gaine de protection. ladite fibre optique (1) présentant d'une part, une partie (15) dont la gaine mécanique a été dénudée. ladite partie dénudée de la fibre ayant une première extrémité se terminant par une face (4) de sortie, d'autre part, une partie non dénudée ayant une seconde extrémité éclairée par ledit faisceau de lumière : un mandrin à vide (2) comprenant des surfaces rectilignes formant un dièdre qui maintient la partie dénudée (15) de la fibre (1). ladite face (4) de sortie de la fibre arrivant au bord du dièdre ; des moyens (3) de rotation pour animer d'un mouvement de rotation la partie non dénudée de la fibre (1) ; un second objectif (14) qui collimate le faisceau émergeant de ladite face (4) de sortie ; des moyens récepteurs (6) de lumière couplés à des moyens (3) de détection étant placés dans un plan de détection (P) perpendiculaire à la direction de l'axe de symétrie de la partie dénudée (15) de la fibre ; des moyens (10) électroniques de traitement étant couplés à ces moyens (9) de détection et permettant d'analyser le signal reçu par ces moyens (9) de détection aux fréquences multiples de la fréquence $f_0$.

4. Dispositif selon la revendication 3, caractérisé en ce que les moyens (3) de mise en rotation de la fibre (1) sont situés entre la source (11) et le mandrin à vide (2).

5. Dispositif selon la revendication 3, caractérisé en ce que la fibre objet de la mesure a une longueur comprise dans la gamme de 1 à 10 mètres.

6. Dispositif selon la revendication 3, caractérisé en ce que les moyens (9) de détection sont réalisés par un photodétecteur.

7. Dispositif de mesure selon la revendication 3, caractérisé en ce que les moyens de détection comprennent un photodétecteur (9) couplé à une extrémité (8) d'une fibre (7) monomode, l'autre extrémité (6) de cette fibre (7) étant placée dans le plan (P) de détection et constituant lesdits moyens récepteurs de lumière.

8. Dispositif selon la revendication 3, caractérisé en ce que les moyens (10) électronique de traitement comprennent un amplificateur synchrone de la fréquence de rotation $f_0$.

Claims

1. A method for measuring the geometrical characteristics of an optical fiber (1) comprising at least one optical core (20). a mechanical sheath (21) and a protective sheath, said measurement consisting at least of the measurement of the concentricity of the optical core in the mechanical sheath, as well as the measurement of the core ellipticity, characterized in that it comprises :

a first stage of preparing the fiber (1) to be measured, which consists of baring the mechanical sheath by a length (15) of said fiber at one end thereof and then sawing and polishing the face (4) of said first end of the fiber :

a second stage of positioning an incoherent light source (11) producing a light beam facing the second end of the fiber (1) in order to pass said beam into said fiber (1) ;

a third stage of analyzing the field near this fiber (1) at its first end and consisting of forming in a plane (P) a magnified image of the outlet face (4) of said first fiber end, a photodetector (6) being placed in this plane (P). a relative rotation with respect to the center of the mechanical sheath (21) of the fiber being carried out between the image and the photodetector (6). said rotation being performed at a frequence $f_0$ :

a fourth stage of processing the signal received by the photodetector (6) comprising :

a phase of calibrating the measurement by comparing with reference signals.

a phase of detecting the amplitude of the signal received by the photodetector at frequencies which are multiples of the rotation frequency $f_0$ ;

a phase of determining the concentricity of the optical core in the mechanical sheath and the ellipticity of the optical core on the basis of the amplitudes measured at frequencies $f_0$ and $2f_0$.

2. A measuring method according to claim 1, characterized in that the fourth stage also comprises the determination of the symmetry of order 3 of the optical core on the basis of the amplitude of the signal at frequency $3f_0$.

3. A device for performing the method according to any one of claims 1 or 2, characterized in that it comprises an incoherent light source (11) emitting a light beam ; a first objective (12) making it possible to collimate this beam ; an optical fiber (1) consisting at least of an optical core (20), a mechanical sheath (21) and a protective sheath, and including a first portion (15) in which the mechanical sheath has been bared, said bared fiber portion having a first end terminating in an outlet face (4), and a second, not bared portion having a second end which is illuminated by said light beam ; a recessed mandrel (2) having rectilinear surfaces forming a dihedron which maintains the bared portion (15) of the fiber (1), the outlet face (4) of said fiber reaching the edge of the dihedron ; rotational means (3) for rotating the not bared portion of the fiber (1) ; a second objective (14) which collimates the beam leaving said outlet face (4) ; light receiving means (6) coupled to detection means (9) being placed in a detection plane (P) perpendicular to the direction of the axis of symmetry of said bared portion of the fiber ; and electronic processing means (10) coupled to the detection means (9) and making it possible to analyse the signal received by the detection means (9) at frequencies which are multiples of frequency $f_0$.

4. A device according to claim 3, characterized in that the means (3) for rotating the fiber (1) are positioned between the source (11) and the recessed mandrel (2).

5. A device according to claim 3, characterized in that the fiber to be measured has a length between 1 and 10 meters.

6. A device according to claim 3, characterized in that the detection means (9) are realised by a photodetector.

7. A measuring device according to claim 3, characterized in that the detection means comprise a photodetector (9) coupled to one end (8) of a monomode fiber (7), the other end (6) of the fiber (7) being placed in the detection plane (P) and constituting said light reception means.

8. A device according to claim 3, characterized in that the electronic processing means comprise a synchroneous amplifier of the rotation frequency $f_0$.

## Patentansprüche

1. Verfahren zur Messung geometrischer Kennwerte einer Lichtleitfaser (1), die mindestens einen optischen Kern (20), eine mechanische Hülle (21) und eine Schutzhülle aufweist, wobei die Messung mindestens die konzentrische Lage des optischen Kerns in der mechanischen Hülle und den Grad der Unrundheit des Kerns umfaßt, dadurch gekennzeichnet, daß das Verfahren umfaßt :

einen ersten Schritt, bei dem die zu messende Faser (1) vorbereitet wird, indem die mechanische Hülle über eine Länge (15) der Faser an einem ihrer Enden freigelegt wird, die Stirnfläche (4) dieses ersten Endes dieser Faser gesägt und poliert wird ;

einen zweiten Schritt, bei dem eine inkohärente Lichtquelle (11), die ein Lichtbündel erzeugt, gegenüber dem zweiten Ende dieser Faser (1) angeordnet wird, um dieses Lichtbündel in das Innere dieser Faser (1) zu schicken ;

einen dritten Schritt, bei dem das Feld in der Nähe dieser Faser (1) an deren erstem Ende analysiert wird, indem ein vergrößertes Bild der Ausgangsstirnseite (4) dieses ersten Faserendes in einer Ebene (P) gebildet wird, wobei ein Lichtdetektor (6) in dieser Ebene (P) angeordnet wird und eine relative Drehung bezüglich des Zentrums der mechanischen Hülle (21) der Faser zwischen diesem Bild und diesem Lichtdetektor (6) erfolgt, die bei einer Frequenz $f_0$ durchgeführt wird ;

einen vierten Schritt, der dazu bestimmt ist, das vom Lichtdetektor (6) empfangene Signal zu bearbeiten, wobei dieser Schritt einschließt :

eine Eichphase der Messung durch Vergleich mit Bezugssignalen ;

eine Phase zur Ermittlung der Amplitude des vom Lichtdetektor bei Frequenzen empfangenen Signals, die Vielfache der Drehfrequenz $f_0$ sind ;

eine Phase der Bestimmung der konzentrischen Lage des optischen Kerns in der mechanischen Hülle und des Grades der Unrundheit des optischen Kerns ausgehend von den bei den Frequenzen $f_0$ und $2f_0$ gemessenen Amplituden.

2. Verfahren zur Messung nach Anspruch 1, dadurch gekennzeichnet, daß der vierte Schritt außerdem die Bestimmung der Symmetrie dritter Ordnung des optischen Kerns ausgehend von der Amplitude des Signals bei der Frequenz $3f_0$ enthält.

3. Vorrichtung zur Durchführung des Verfahrens nach einem beliebigen der Ansprüche 1 oder 2, dadurch gekennzeichnet, daß sie enthält : eine Quelle (11) inkohärenten Lichts, die ein Lichtbündel aussendet ; ein erstes Objektiv (12), das als Kollimator dieses Bündels wirkt ; eine Lichtleitfaser (1), die mindestens einen optischen Kern (20), eine mechanische Hülle (21) und eine Schutzhülle umfaßt und einerseits einen Bereich (15), in dem die mechanische Hülle freigelegt wurde, wobei der freigelegte Bereich der Faser ein erstes Ende besitzt, das in einer Stirnseite (4) mündet, und andererseits einen nicht freigelegten Bereich mit einem zweiten Ende besitzt, das von dem Lichtbündel beleuchtet wird ; einen Richtklotz (2), der zwei geradlinige, einen Zweiflächer bildende Oberflächen besitzt und den freigelegten Teil (15) der Faser hält, wobei die Ausgangsstirnseite der Faser in Höhe des Randes des Zweiflächers ankommt ; Drehmittel (3), um den nicht freigelegten Teil der Faser (1) in eine Drehbewegung zu versetzen ; ein zweites Objektiv (14), das als Kollimator für das an der Ausgangsseite (4) austretende Bündel wirkt ; Mittel (6) zum Empfang des Lichts, die an Detektormittel (9) angeschlossen sind und in einer senkrecht zur Richtung der Symmetrieachse des freigelegten Bereichs (15) der Faser liegenden Detektorebene (P) angeordnet sind ; elektronische Verarbeitungsmittel (10), die an die Detektormittel (9) gekoppelt sind und die Analyse des von den Detektormitteln (9) empfangenen Signals bei den Vielfachfrequenzen der Frequenz $f_0$ erlaubt.

4. Vorrichtung nach Anspruch 3, dadurch gekennzeichnet, daß die Mittel (3), mit denen die Faser (1) in Drehung versetzt wird, zwischen der Quelle (11) und dem Richtklotz (2) angeordnet sind.

5. Vorrichtung nach Anspruch 3, dadurch gekennzeichnet, daß die auszumessende Faser eine Länge zwischen 1 und 10 m hat.

6. Vorrichtung nach Anspruch 3, dadurch gekennzeichnet, daß die Detektormittel (9) von einem Lichtdetektor gebildet werden.

7. Meßvorrichtung nach Anspruch 3, dadurch gekennzeichnet, daß die Detektormittel einen Lichtdetektor (9) aufweisen, der an ein Ende (8) einer Monomode-Faser (7) gekoppelt ist, während das andere Ende (6) dieser Faser (7) in der Detektorebene (P) liegt und die Lichtempfangsmittel bildet.

8. Vorrichtung nach Anspruch 3, dadurch gekennzeichnet, daß die elektronischen Verarbeitungsmittel (10) einen mit der Rotationsfrequenz $f_0$ synchronen Verstärker aufweisen.

# FIG.1

# FIG. 2

# FIG.3

# FIG.4

# FIG.5

# FIG.6

# FIG.7

# FIG.8

# FIG.9

$P(\theta)$

$\theta_A$ $\theta_B$ $\theta_C$ $\theta_D$ $\theta$

# FIG.10

$T_F(P(\theta))$

$0$ $f_0$ $2f_0$ $f$

# FIG.11

# FIG.12

$P(\theta)$

$\theta_A$ $\theta_B$ $\theta_C$ $\theta_D$ $\theta_E$ $\theta_F$ $\theta$

# FIG.13

$T_F(P(\theta))$

$0$ $f_0$ $2f_0$ $3f_0$ $f$

2

# FIG.14

FIG.15

0 094 864